# EUROPEAN PATENT SPECIFICATION

(11) **EP 2 168 817 B1**
(45) Date of publication and mention of the grant of the patent: **16.04.2014**
(21) Application number: 09075418.5
(22) Date of filing: 11.09.2009
(51) Int. Cl.: B60R 15/00

(54) **Water supply system for a camping vehicle**
Wasserzufuhrsystem für ein Campingfahrzeug
Système d'alimentation en eau pour véhicule de camping

(30) Priority: 26.09.2008 GB 0817631
(43) Date of publication of application: 31.03.2010
(73) Proprietor: Munster Simms Engineering Limited, Bangor, County Down BT19 1LT (GB)
(72) Inventor: McFarland, Stanley, County Down, BT 19 1LT (GB); Turner, Steven, County Down, BT 19 1LT (GB)
(74) Representative: Waller, Stephen

(56) References cited:
- DE-U1- 20 105 548
- US-A- 4 039 001

## Description

This invention relates to a water supply system for a camping vehicle, such as a camper van or recreational vehicle, and in particular to a water supply system for supplying water to an internal tank of such a vehicle.

Typically, recreational vehicles and camper vans are provided with an internal water tank which acts as a reservoir of fresh water for supplying water to taps and other plumbing systems (such as a toilet or shower) in the vehicle. The internal water tank is typically adapted to be filled from a filler opening in a side of the vehicle. A hose pipe can be inserted into the filler opening and water can thus be supplied to the internal water tank from an external source, such as a tap connected to a mains water supply.

The internal water tank is typically filled from a main water supply when the vehicle arrives on a camp site. Such filling operation is time consuming because the user must physically hold a hose pipe in the filler opening of the vehicle and manually open and close a main water supply tap to control the filling operation. It is also difficult to assess how much water is in the internal water tank, leading to a risk of spillage.

On some camping sites there may not be vehicular access to a suitable mains water supply tap. In such circumstances it is known to use a portable external water tank or carrier which can be filled from a suitable tap and then be carried or wheeled to the vehicle so that the water can be transferred into the internal water tank. It is known to provide electrically powered submersible pumps connected to a filling hose for transferring water from such external tanks to the internal water tank of the vehicle, like described in DE 201 05 548 U1. Such pumps can be supplied with electrical power from the vehicle's battery, typically by electrical connector to the vehicles cigarette lighter socket or similar power outlet. Such process of filling the internal water tank from an external tank is again very labour intensive and requires manual control of the submersible pump during the filling operation to avoid overfilling of the internal tank and to maintain the filling hose in the filler opening of the vehicle.

A further known method of filling an internal tank of a camping vehicle is to simply pour water into the filler opening from a suitable container. This requires the user to manually lift the container, leading to a risk of injury, and can be very time consuming.

According to the present invention there is provided a water supply system for an internal water tank of a camping vehicle comprising a socket, having a water supply connector for connecting to a water supply hose and a power outlet connector for supplying electrical power to an external pump, such as a submersible pump, a normally closed solenoid valve controlling fluid communication between the water supply connector and the internal tank, and further comprising a level sensor associated with the internal water tank, said level sensor being adapted to control the supply of power to the solenoid and the socket, shutting off the power supply to the solenoid and socket when the water level in the internal tank reaches a predetermined level.

Preferably the socket incorporates a pressure switch adapted to cut power to the solenoid valve when the water pressure at the water supply connector is below a predetermined level.

Preferably the socket is mounted on an outer surface of the vehicle, for example on a side wall of the vehicle. The socket may be provided with a cover.

Preferably the water supply system comprises a first water supply hose having a connector at one end, adapted to be connectable to the water supply connector of the socket, and a tap connector at an opposite end adapted for fitment on, or connection, to a water supply tap.

Preferably the water supply system further comprises a second water supply hose having a connector at one end, adapted to be connectable to the water supply connector of the socket, and a pump at or adjacent an opposite end, said pump being electrically connected to a power supply connector adapted to be connectable to the power outlet connector of the socket. Preferably the connector of the second water supply hose and the power supply connector are mounted in a common plug connectable to the socket provided on the vehicle. The pump may comprise a submersible pump.

The first water supply hose may be used to supply water to the internal water tank from a mains water supply tap while the second water supply hose may be used to transfer water from an external water tank to the internal tank.

The present invention provides a water supply system allowing the internal water tank of a vehicle to be automatically filled from either a mains water supply or an external water tank.

The level sensor may comprise a float switch, an external sensor or any other suitable water level sensing means.

A microelectronic controller may be provided for controlling the power supply to the solenoid and socket in response to signals from the pressure switch and the level sensor.

The water supply connector of the socket may be provided with a pressure reduction valve for reducing the pressure of water downstream of the socket when the water supply connector is connected to a mains water supply. Alternatively, a pressure reduction valve may be provided downstream of the socket, or in a water supply hose upstream of the socket.

One or more valves may be provided between the water supply connector and the internal water tank and between the internal water tank and the plumbing system of the vehicle to allow water to be selectively supplied to the plumbing system of the vehicle directly from the water supply connector, bypassing the internal water tank, if desired.

According to a further aspect of the present invention there is provided a kit of parts for a water supply system of a camping vehicle, said kit of parts comprises a socket mountable on an exteriorly accessible region of the vehicle and having a water supply connector for connector to a water supply hose and a power outlet connector for supplying electrical power to an external pump, such as a submersible pump, a normally closed solenoid valve for controlling the flow of water from the water supply connector of the socket to an internal water tank of the vehicle, a water level sensor for sensing when the level of water in the internal water tank of the vehicle reaches a predetermined level, whereby the water level sensor can control the supply of power to the solenoid and the socket, shutting off the power supply to the solenoid and socket when the water level in the internal tank reaches a predetermined level. Preferably the kit of parts further comprises a pressure switch connectable to cut off power to the solenoid when the water pressure at the water supply connector is below a predetermined level.

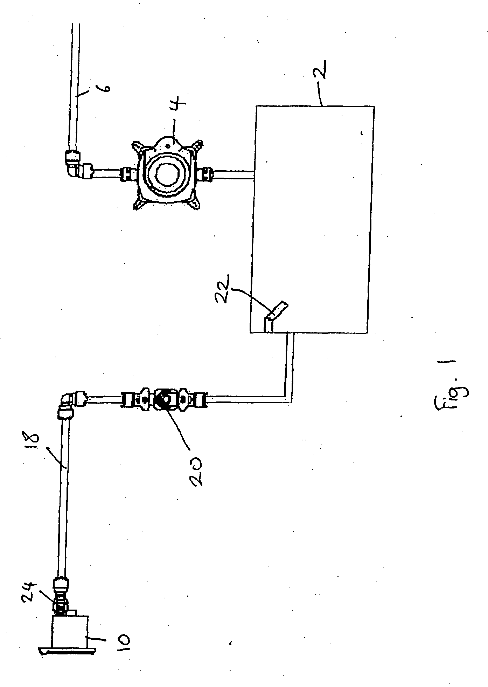

An embodiment of the invention will now be described, by way of example only, with reference to the accompanying drawings, in which:-
Figure 1 is a schematic view of a water supply system according to a first embodiment of the present invention;
Figure 2 is a perspective view of a first water supply hose assembly for connecting the water supply system to a main water supply;
Figure 3 is a perspective view of a second water supply hose assembly for connecting the water supply system to an external water tank;

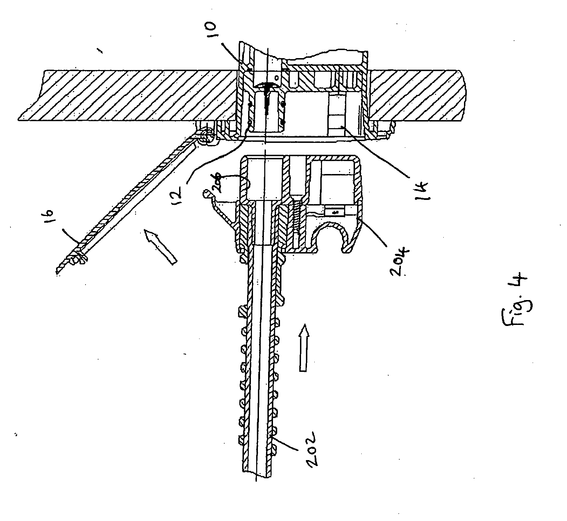

Figure 4 is a sectional view through the socket of the water supply system of Figure 1; and
Figure 5 is an electrical wiring diagram of the water supply system of Figure 1.

A water supply system for a camping vehicle comprises an internal water tank 2 mounted within the vehicle having a pump 4 and an outlet pipe 6 leading to a number of plumbing fittings throughout the vehicle, such as one or more taps, a shower and toilet facilities.

A socket 10 is typically mounted on an exterior wall of the vehicle, the socket 10 having a water supply connector 12, in the form of a spigot, and a power outlet connector 14 for supplying power to an external pump, as will be described below in more detail. Alternatively the socket may be mounted in a battery box or in any other exteriorly accessible location on the vehicle.

The socket 10 is adapted to receive a male connector of a water supply hose, as will be described below. A protective cover 16 is provided on the socket for covering the socket when not in use.

The internal water tank 2 is connected to the water supply connector 12 of the socket 10 by a water supply line 18 while the power outlet connector 14 is connectable to a battery within the vehicle. A normally closed solenoid valve 20 is located in the water supply line 18 between the internal water tank 2 and the water supply connector 12 of the socket 10.

A float switch 22 is provided in the internal water tank 2, the float switch 22 being wired to cut off power to the solenoid 20 and to the power outlet connector 14 of the socket 10 when the internal water tank 2 is full.

A pressure switch 24 is provided in the socket 10, the pressure switch 24 being arranged to cut power to the solenoid 20 when the water pressure at the water supply connector 12 is below a predetermined level, for example when there is no water supply hose connected to the socket.

The water supply system is adapted to be connectable to either a mains water supply or an external tank via the use of two alternative water supply hose assemblies.

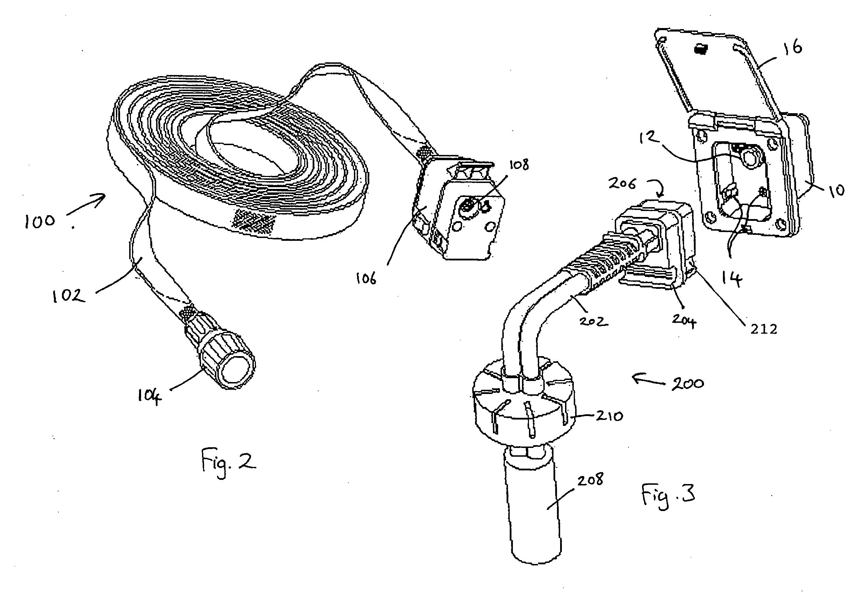

A first water supply hose assembly 100 for use with a mains water supply is shown in Figure 2. The first water supply hose assembly 100 comprises a flexible hose 102 having a tap connector 104 at a first end adapted to connect to a standard tap connector, and a plug 106 at a second, opposite end, adapted to be receivable within the socket 10 of the vehicle.

The plug 106 has an aperture 108 adapted to receive the spigot of the water supply connector 12 of the socket 10 such that the hose 102 can supply water to the water supply connector 12. A pressure reduction valve may be built into the plug. Alternatively, a pressure reduction valve may be provided in or downstream of the water supply connector 12 for limiting the pressure of water supplied to the vehicle plumbing system.

In use, the tap connector 104 is connected to a main water supply tap and the plug 106 is inserted into the socket 10 of the vehicle. The tap is then turned on. If the vehicle can remain next to the tap, the user can then leave the hose assembly connected and the tap switched on until it is desired to move the vehicle.

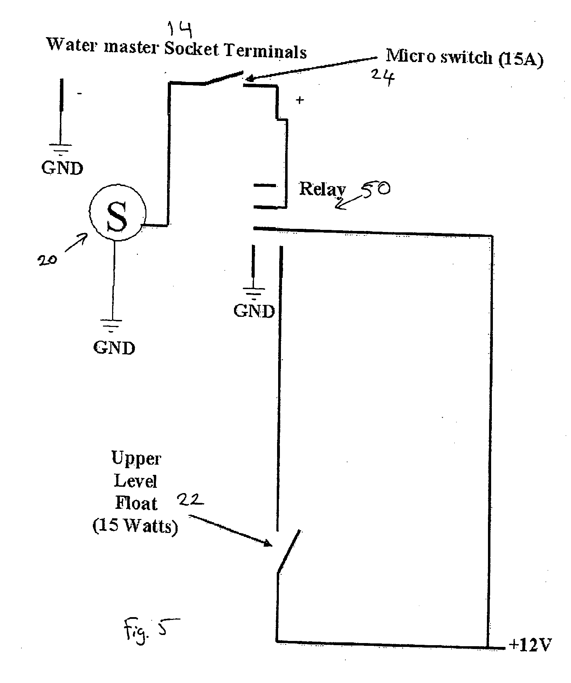

Figure 5 illustrates a wiring or circuit diagram of the water supply system. A 12 volt supply from the vehicle is connected to a low current side of a relay 50 via the float switch 22. The 12 volt supply is also connected to the input side of a high current side of the relay such that the high current side is controlled by the float switch 22. The output side of the high current side of the relay is connected to the solenoid valve 20 via the pressure switch 24. The power outlet connector 14 of the socket is connected in parallel with the pressure switch and solenoid such that the power supply to the power outlet connector 14 is controlled by the float switch 22.

The operation of the water supply system in the first mode of operation using the first water supply hose assembly will now be described with reference to the wiring diagram of Figure 5. When the liquid level in the internal water tank 2 is below the predetermined level (i.e. the internal tank is not full), the float switch 22 is closed and power is supplied to the relay 50. This in turn supplies power to the solenoid valve 20 via the pressure switch 24. The relay 50 also supplies power to the electrical connector 14 on the socket 10, although this is not used in this mode of operation.

Initially, when there is no water pressure at the water supply connector 12, the pressure switch 24 is open, maintaining the solenoid valve 20 in its closed position. When the mains water supply tap is switched on with the plug 106 inserted into the vehicle socket 10, the water pressure closes the pressure switch 24, completing the circuit and opening the solenoid valve 20, allowing water to pass into the internal tank. When the internal tank 2 becomes full, the float switch 22 is opened, cutting off power to the relay 50, thus cutting off power to the solenoid valve 20 and the power outlet connector 14 of the socket 10.

The main water supply can be left connected and the float switch 22 will control the supply of power to the solenoid valve 20, and hence the opening and closing of the solenoid valve 20, to maintain the desired level of water in the internal tank 2.

A second water supply hose assembly 200 for use with an external water tank or container is shown in Figure 3. The second water supply hose assembly 200 comprises a flexible hose 202 having a plug 204 at a first end, adapted to be receivable within the socket 10 of the vehicle. The plug 204 has an aperture 206 adapted to receive the spigot of the water supply connector 12 of the socket 10 such that the hose 202 can supply water to the water supply connector 12, and an electrical connector 212 adapted to cooperate with the electrical connector 14 of the socket 10 to supply electrical power to a submersible pump 208 located at a second, opposite end of the hose 202. The water supply hose assembly 200 is integrated into a cap 210 of the external water container. Conductors run in a pipe parallel to the hose 202 from the electrical connector of the plug 204 to the pump 208.

In use, the external water container, once filled with water, is located next to the socket 10 of the vehicle and the plug 204 of the hose assembly 200 is inserted into the socket 10.

When the liquid level in the internal water tank is below the predetermined level (i.e. the internal tank is not full), the float switch 22 is closed and power is supplied to the relay 50. This supplies power to the electrical connector 14 on the socket 10, supplying power to the submersible pump 208 which pumps water up the hose 202 of the hose assembly 200. When the pump 208 is operated, the water pressure builds in the hose 202 and closes the pressure switch 24 in the socket 10, completing the circuit and opening the solenoid valve 20, allowing water from the external tank to pass into the internal tank 2. When the internal tank becomes full, the float switch 22 is opened, cutting off power to the relay 50, thus cutting off power to the solenoid valve 20 and the electrical connector 14 of the socket 10, stopping the pump 208 and closing the solenoid valve 20.

The float switch 22 will control the supply of power to the solenoid valve 20 and pump 208, and hence control the operation of the submersible pump 208 to maintain the desired level of water in the internal tank 2.

The pressure switch 24 ensures that power is cut to the solenoid valve 20 when nothing is connected to the socket 10. If the pressure switch 24 were not present, when the float valve 22 is closed, indicating that the internal tank is not full, but no hose assembly 100,200 is connected to the socket 10, the solenoid valve 20 would remain energised, draining the vehicle's battery. In such circumstances, the pressure switch 24 detects the lack of water pressure at the socket 10 and cuts power to the solenoid valve 20.

The invention is not limited to the embodiment described herein but can be amended or modified without departing from the scope of the present invention. For example, instead of the circuit shown in Figure 5, the float switch and the pressure switch may provide signals to a programmable microcontroller which can be programmed to control the operation of the solenoid and the power supply to the socket.

The float switch can be replaced by any means for sensing the level of water in the internal water tank.

While a submersible pump is described in relation to the second water supply hose assembly, any suitable form of pump may be used to transfer water from the external tank to the internal tank.

## Claims

1. A water supply system for an internal water tank of a camping vehicle comprising a socket, having a water supply connector for connecting to a water supply hose and a power outlet connector for supplying electrical power to an external pump, such as a submersible pump, a normally closed solenoid valve controlling fluid communication between the water supply connector and the internal tank, and further comprising a level sensor associated with the internal water tank, said level sensor being adapted to control the supply of power to the solenoid and the socket, shutting off the power supply to the solenoid and socket when the water level in the internal tank reaches a predetermined level.

2. A system as claimed in claim 1, wherein the socket incorporates a pressure switch adapted to cut power to the solenoid valve when the water pressure at the water supply connector is below a predetermined level.

3. A system as claimed in claim 1 or claim 2, wherein the socket is mounted on an outer surface of the vehicle, for example on a side wall of the vehicle.

4. A system as claimed in any preceding claim, wherein the water supply system comprises a first water supply hose having a connector at one end, adapted to be connectable to the water supply connector of the socket, and a tap connector at an opposite end adapted for fitment on, or connection, to a water supply tap.

5. A system as claimed in claim 4, wherein the water supply system further comprises a second water supply hose having a connector at one end, adapted to be connectable to the water supply connector of the socket, and a pump at or adjacent an opposite end, said pump being electrically connected to a power supply connector adapted to be connectable to the power outlet connector of the socket.

6. A system as claimed in claim 5, wherein the connector of the second water supply hose and the power supply connector are mounted in a common plug connectable to the socket provided on the vehicle.

7. A system as claimed in claim 5 or claim 6, wherein the pump comprises a submersible pump.

8. A system as claimed in any of claims 4 to 7, wherein the first water supply hose is used to supply water to the internal water tank from a mains water supply tap while the second water supply hose may be used to transfer water from an external water tank to the internal tank.

9. A system as claimed in any preceding claim, wherein the level sensor comprises a float switch, an external sensor or any other suitable water level sensing means.

10. A system as claimed in any preceding claim, wherein a microelectronic controller is provided for controlling the power supply to the solenoid and socket in response to signals from the level sensor and, where provided, from the pressure switch.

11. A system as claimed in any preceding claim, wherein the water supply connector of the socket is provided with a pressure reduction valve for reducing the pressure of water downstream of the socket when the water supply connector is connected to a mains water supply.

12. A system as claimed in any of claims I to 10, wherein a pressure reduction valve is provided downstream of the socket, or in a water supply hose upstream of the socket.

13. A system as claimed in any preceding claim, wherein one or more valves are provided between the water supply connector and the internal water tank and between the internal water tank and the plumbing system of the vehicle to allow water to be selectively supplied to the plumbing system of the vehicle directly from the water supply connector, bypassing the internal water tank, if desired.

14. A kit of parts for a water supply system of a camping vehicle, said kit of parts comprises a socket mountable on an exteriorly accessible region of the vehicle and having a water supply connector for connector to a water supply hose and a power outlet connector for supplying electrical power to an external pump, such as a submersible pump, a normally closed solenoid valve for controlling the flow of water from the water supply connector of the socket to an internal water tank of the vehicle, a water level sensor for sensing when the level of water in the internal water tank of the vehicle reaches a predetermined level, whereby the water level sensor can control the supply of power to the solenoid and the socket, shutting off the power supply to the solenoid and socket when the water level in the internal tank reaches a predetermined level.

15. A kit of parts as claimed in claim 15, further comprising a pressure switch connectable to cut off power to the solenoid when the water pressure at the water supply connector is below a predetermined level.

## Patentansprüche

1. Wasserzufuhrsystem für einen internen Wasserbehälter eines Campingfahrzeugs, umfassend eine Buchse mit einem Wasserzufuhranschluss zum Anschließen an einem Wasserzufuhrschlauch und einem Stromauslassanschluss zum Zuführen von elektrischem Strom an eine externe Pumpe, wie etwa eine Tauchpumpe, wobei ein normalerweise geschlossenes Magnetventil den Fluidaustausch zwischen dem Wasserzufuhranschluss und dem internen Behälter steuert, und weiter umfassend einen mit dem internen Wasserbehälter assoziierten Niveausensor, wobei der Niveausensor dazu angepasst ist, die Zufuhr von Strom zu dem Elektromagneten und der Buchse zu steuern und die Stromzufuhr zu dem Elektromagneten und der Buchse abschaltet, wenn das Wasserniveau in dem internen Behälter ein vorherbestimmtes Niveau erreicht.

2. System nach Anspruch 1, wobei die Buchse einen Druckschalter enthält, der dazu angepasst ist, Strom zu dem Magnetventil zu unterbrechen, wenn der Wasserdruck an dem Wasserzufuhranschluss unter einem vorherbestimmten Niveau liegt.

3. System nach Anspruch 1 oder Anspruch 2, wobei die Buchse an einer äußeren Oberfläche des Fahrzeugs angebracht ist, zum Beispiel an einer Seitenwand des Fahrzeugs.

4. System nach einem der vorangehenden Ansprüche, wobei das Wasserzufuhrsystem einen ersten Wasserzufuhrschlauch umfasst, der einen Anschluss an einem Ende aufweist, der dazu angepasst ist, an den Wasserzufuhranschluss der Buchse anschließbar zu sein, und einen Hahnanschluss an einem gegenüberliegenden Ende davon umfasst, der zum Anbauen an oder Anschließen an einen Wasserzufuhrhalxn angepasst ist.

5. System nach Anspruch 4, wobei das Wasserzufuhrsystem weiter einen zweiten Wasserzufuhrschlauch umfasst, der einen Anschluss an einem Ende aufweist, der dazu angepasst ist, an den Wasserzufuhranschluss der Buchse anschließbar zu sein, und eine Pumpe an oder benachbart einem gegenüberliegenden Ende umfasst, wobei die Pumpe elektrisch an einen Stromzufuhranschluss angeschlossen ist, der dazu angepasst ist, an den Stromauslassanschluss der Buchse anschließbar zu sein.

6. System nach Anspruch 5, wobei der Anschluss des zweiten Wasserzufuhrschlauch und der Stromzufuhranschluss in einem gemeinsamen Stecker angebracht sind, der an der an dem Fahrzeug vorgesehenen Buchse anschließbar ist.

7. System nach Anspruch 5 oder Anspruch 6, wobei die Pumpe eine Tauchpumpe umfasst.

8. System nach einem der Ansprüche 4 bis 7, wobei der erste Wasserzufuhrschlauch verwendet wird, um Wasser von einem Leitungswasserzufuhrhahn zu dem internen Wasserbehälter zuzuführen, während der zweite Wasserzufuhrschlauch verwendet werden kann, um Wasser von einem externen Wasserbehälter zu dem internen Wasserbehälter umzufüllen.

9. System nach einem der vorangehenden Ansprüche, wobei der Niveausensor einen Schwimmerschalter, einen externen Sensor oder ein beliebiges anderes geeignetes Wasserniveauabfühlmittel umfasst.

10. System nach einem der vorangehenden Ansprüche, wobei ein mikroelektromsches Steuergerät vorgesehen ist, um die Stromzufuhr zu dem Elektromagneten und der Buchse als Reaktion auf Signale von dem Niveausensor und, wenn vorgesehen, von dem Druckschalter zu steuern.

11. System nach einem der vorangehenden Ansprüche, wobei der Wasserzufuhranschluss der Buchse mit einem Druckreduzierventil versehen ist, um den Druck des Wassers stromabwärts von der Buchse zu reduzieren, wenn der Wasserzufuhranschluss an eine Leitungswasserzufuhr angeschlossen ist.

12. System nach einem der Ansprüche 1 bis 10, wobei ein Druckreduzierventil stromabwärts von der Buchse oder in einem Wasseraufuhrschlauch stromaufwärts von der Buchse vorgesehen ist.

13. System nach einem der vorangehenden Ansprüche, wobei ein oder mehrere Ventile zwischen dem Wasserzufuhranschluss und dem internen Wasserbehälter und zwischen dem internen Wasserbehälter und dem Sanitärsystem des Fahrzeugs vorgesehen sind, um zuzulassen, dass, falls gewünscht, Wasser selektiv unter Umgehung des internen Wasserbehälters direkt von dem Wasserzufuhranschluss zu dem Sanitärsystem des Fahrzeugs zugeführt werden kann.

14. Satz von Teilen für ein Wasserzufuhrsystem eines Campingfahrzeugs, wobei der Satz von Teilen eine Buchse umfasst, die an einem von außen zugänglichen Bereich des Fahrzeugs angebracht werden kann und Folgendes aufweist: einen Wasserzufuhranschluss zum Anschließen an einen Wasserzufuhrschlauch und einen Stromauslassanschluss zum Zuführten von elektrischem Strom zu einer externen Pumpe, wie etwa einer Tauchpumpe, ein normalerweise geschlossenes Magnetventil zum Steuern des Stroms von Wasser von dem Wasserzufuhranschluss der Buchse zu einem internen Wasserbehälter des Fahrzeugs, einen Wasserniveausensor zum Abfühlen, wann das Niveau von Wasser in dem internen Wasserbehälter des internen Wasserbehälters des Fahrzeugs ein vorherbestimmtes Niveau erreicht, wodurch der Wasserniveausensor die Zufuhr von Strom zu dem Elektromagneten und der Buchse steuern kann und die Stromzufuhr zu dem Elektromagneten und der Buchse abschaltet, wenn das Wasserniveau in dem internen Behälter ein vorherbestimmtes Niveau erreicht.

15. Satz von Teilen nach Anspruch 15 [*sic*], weiter umfassend einen Druckschalter, der angeschlossen werden kann, um Strom zu dem Elektromagneten zu unterbrechen, wenn der Wasserdruck an dem Wasserzufuhranschluss unter einem vorherbestimmten Niveau liegt.

## Revendications

1. Système d' alimentation en eau pour un réservoir d'eau interne d'un véhicule de camping comportant une prise, ayant un raccord d'alimentation en eau à des fins de raccordement au niveau d'un tuyau d'alimentation en eau et un raccord de prise de courant à des fins d'alimentation électrique au niveau d'une pompe externe, telle une pompe immergée, une électrovalve normalement fermée permettant de commander la communication fluidique entre le raccord d'alimentation en eau et le réservoir interne, et comportant par ailleurs un capteur de niveau associé au réservoir d'eau interne, ledit capteur de niveau étant adapté pour commander l'alimentation électrique au niveau de l'électrovalve et de la prise, à des fins de coupure de l'alimentation électrique au niveau de l'électrovalve et de la prise quand le niveau d'eau dans le réservoir interne atteint un niveau prédéterminé.

2. Système selon la revendication 1, dans lequel la prise renferme un pressostat adapté à des fins de coupure de l'alimentation électrique au niveau de l'électrovalve quand la pression de l'eau au niveau du raccord d'alimentation en eau est inférieure à un niveau prédéterminé.

3. Système selon la revendication 1 ou la revendication 2, dans lequel la prise est montée sur une surface extérieure du véhicule, par exemple sur une paroi latérale du véhicule.

4. Système selon l'une quelconque des revendications précédentes, dans lequel le système d'alimentation en eau comporte un premier tuyau d'alimentation en eau ayant un raccord au niveau d'une extrémité, adapté à des fins de raccordement au niveau du raccord d'alimentation en eau de la prise, et un raccord de robinet au niveau d'une extrémité opposée adapté à des fins d'installation, ou de raccordement, sur un robinet d'alimentation en eau.

5. Système selon la revendication 4, dans lequel le système d'alimentation en eau comporte par ailleurs un second tuyau d'alimentation en eau ayant un raccord au niveau d'une extrémité, adapté à des fins de raccordement au niveau du raccord d'alimentation en eau de la prise, et une pompe au niveau d'une, ou de manière adjacente par rapport à une, extrémité opposée, ladite pompe étant raccordée électriquement à un raccord d'alimentation électrique adapté à des fins de raccordement au niveau du raccord de prise de courant de la prise.

6. Système selon la revendication 5, dans lequel le raccord du second tuyau d'alimentation en eau et le raccord d'alimentation électrique sont montés dans une fiche commune en mesure d'être raccordée sur la prise mise en oeuvre sur le véhicule.

7. Système selon la revendication 5 ou la revendication 6, dans lequel la pompe comporte une pompe immergée.

8. Système selon l'une quelconque des revendications 4 à 7, dans lequel le premier tuyau d'alimentation en eau est utilisé pour alimenter de l'eau dans le réservoir d'eau interne en provenance d'un robinet d'alimentation en eau du réseau alors que le second tuyau d'alimentation en eau peut être utilisé pour transférer de l'eau en provenance d'un réservoir d'eau externe jusque dans le réservoir interne.

9. Système selon l'une quelconque des revendications précédentes, dans lequel le capteur de niveau comporte un interrupteur à flotteur, un capteur externe ou tout autre moyen approprié de détection de niveau d'eau.

10. Système selon l'une quelconque des revendications précédentes, dans lequel un dispositif de commande microélectronique est mis en oeuvre à des fins de commande de l'alimentation électrique au niveau de l'électrovalve et de la prise en réponse à des signaux provenant du capteur de niveau et, selon le cas, en provenance du pressostat.

11. Système selon l'une quelconque des revendications précédentes, dans lequel le raccord d'alimentation en eau de la prise comporte un robinet réducteur de pression permettant de réduire la pression de l'eau en aval de la prise quand le raccord d'alimentation en eau est raccordé à une alimentation en eau du réseau.

12. Système selon l'une quelconque des revendications 1 à 10, dans lequel un robinet réducteur de pression est mis en oeuvre en aval de la prise, ou dans un tuyau d'alimentation en eau en amont de la prise.

13. Système selon l'une quelconque des revendications précédentes, dans lequel un ou plusieurs robinets sont mis en oeuvre entre le raccord d'alimentation en eau et le réservoir d'eau interne et entre le réservoir d'eau interne et l'installation de plomberie du véhicule pour permettre à l'eau d'être alimentée de manière sélective dans l'installation de plomberie du véhicule directement en provenance du raccord d'alimentation en eau, en évitant le réservoir d'eau interne, si on le souhaite.

14. Ensemble de pièces pour un système d'alimentation en eau d'un véhicule de camping, ledit ensemble de pièces comportant une prise en mesure d'être montée sur une région accessible depuis l'extérieur du véhicule et ayant un raccord d'alimentation en eau à des fins de raccordement au niveau d'un tuyau d'alimentation en eau et un raccord de prise de courant à des fins d'alimentation électrique au niveau d'une pompe externe, telle une pompe immergée, une électrovalve normalement fermée à des fins de commande de l'écoulement d'eau en provenance du raccord d'alimentation en eau de la prise jusqu'à un réservoir d'eau interne du véhicule, un capteur de niveau d'eau permettant de détecter quand le niveau d'eau dans le réservoir d'eau interne du véhicule atteint un niveau prédéterminé, ce par quoi le capteur de niveau d'eau peut commander l'alimentation électrique au niveau de l'électrovalve et de la prise, à des fins de coupure de l'alimentation électrique au niveau de l'électrovalve et de la prise quand le niveau d'eau dans le réservoir interne atteint un niveau prédéterminé.

15. Ensemble de pièces selon la revendication 15 [*sic*], comportant par ailleurs un pressostat en mesure d'être raccordé à des fins de coupure de l'alimentation électrique au niveau de l'électrovalve quand la pression de l'eau au niveau du raccord d'alimentation en eau est inférieure à un niveau prédéterminé.
